# EUROPEAN PATENT SPECIFICATION

(11) **EP 1 971 102 B1**
(45) Date of publication and mention of the grant of the patent: **17.06.2020**
(21) Application number: 07005250.1
(22) Date of filing: 14.03.2007
(51) Int. Cl.: G06F 21/55, H04L 29/06, H04W 12/12, H04W 88/02

(54) **METHOD AND SYSTEM FOR MONITORING COMMUNICATION DEVICES TO DETECT MALICIOUS SOFTWARE**
VERFAHREN UND SYSTEM ZUR ÜBERWACHUNG VON KOMMUNIKATIONSVORRICHTUNGEN ZUM ERKENNEN VON BÖSWILLIGER SOFTWARE
PROCÉDÉ ET SYSTÈME DE SURVEILLANCE DE DISPOSITIFS DE COMMUNICATION POUR DÉTECTER LES LOGICIELS MALVEILLANTS

(43) Date of publication of application: 17.09.2008
(73) Proprietor: Deutsche Telekom AG, 53113 Bonn (DE)
(72) Inventor: Wetzker, Robert, 10823 Berlin (DE); Scheel, Christian, 10557 Berlin (DE); Luther, Katja, 13189 Berlin (DE); Schmidt, Aubrey-Derrick, 13355 Berlin (DE); Eckert, Volker, 10119 Berlin (DE); Bsufka, Karsten, 12167 Berlin (DE); Chinnow, Joel, 10437 Berlin (DE); Lagemann, Marcus, 10243 Berlin (DE)
(74) Representative: Kampfenkel, Klaus

(56) References cited:
- LUNT T F ET AL: "Knowledge-based intrusion detection" AI SYSTEMS IN GOVERNMENT CONFERENCE, 1989.,PROCEEDINGS OF THE ANNUAL WASHINGTON, DC, USA 27-31 MARCH 1989, WASHINGTON, DC, USA,IEEE COMPUT. SOC. PR, US, 27 March 1989 (1989-03-27), pages 102-107, XP010015634 ISBN: 0-8186-1934-1
- PATCHA ET AL: "An overview of anomaly detection techniques: Existing solutions and latest technological trends" COMPUTER NETWORKS, ELSEVIER SCIENCE PUBLISHERS B.V., AMSTERDAM, NL, vol. 51, no. 12, 16 February 2007 (2007-02-16), pages 3448-3470, XP022120633 ISSN: 1389-1286
- KARSTEN BSUFKA ET AL: "Intelligent Network-Based Early Warning Systems" CRITICAL INFORMATION INFRASTRUCTURES SECURITY LECTURE NOTES IN COMPUTER SCIENCE;;LNCS, SPRINGER BERLIN HEIDELBERG, BE, vol. 4347, 2006, pages 103-111, XP019053382 ISBN: 978-3-540-69083-2
- SCHMIDT A D: "Monitoring of mobile devices for anomaly detection on agent framework JIAC" INTERNET CITATION, [Online] 2006, XP007903621 Retrieved from the Internet: URL:http://www.dai-labor.de/index.php?id=3 53&pubID=303> [retrieved on 2007-11-30]

## Description

### Description

### Field of the invention

The invention relates to communication networks in general, and especially to a method and system for monitoring communication devices connectable to a communication network and to communication devices adapted to be monitored.

### Background of the invention

Malicious software or malware is known as software which is designed to attack computer systems, wherein the malware is spread via a communication network to which the computer system is connectable. Currently, attackers mostly target personal computers (PCs), in order to masquerade, eavesdrop, violate authorization, alter or destroy, manipulate, forge and sabotage data. This mostly happens by using or releasing certain malicious software (malware), which can be categorized for instance as Trojan horses, viruses or worms. Hence, most of the counter software available targets personal computers, too. Different techniques are used to defend and secure these systems, like for instance white list based firewall software, black list based anti-virus software and anomaly based intrusion detection and intrusion prevention systems (IDS/IPS), each having its own weaknesses, which are the need for a networking specialist and a lot of configuration and administration work in the case of firewall software and IDS/IPS and the inability of detecting new unknown malware in the case of anti-virus software. **In "**Knowledge-Based Intrusion Detection" by T.F. Lunt et al., IEEE Comput. Soc. Pr., US, March 27, 1989**, a real-time intrusion-detection expert system (IDES) for monitoring a computer system is described, wherein the computer system continually generates audit data in response to user activity and transmits the audit records to the IDES. The IDES makes the audit data available to a statistical and a rule-based intrusion detection unit, wherein detected anomalies are reported through a user interface.**

With the growing market of mobile devices, attackers could also get more and more interested in this new source of victims, which, furthermore, do not have the same possibilities of securing their system. Firewall and anti-virus software is provided by several companies, but the available products cannot handle unknown attacks as they depend on signatures or have a fixed set of rules explicitly allowing data communication. Furthermore, mobile devices can be attacked in additional ways, utilizing for instance Bluetooth or MMS.

Actually, attackers already got attracted by the mobile platform. In June 2004 the first malware targeting mobile devices appeared, named "Caribe", which was written by a member of the professional virus writing group A29 in order to show that Symbian OS was not as safe as propagated. Since then, the amount of released viruses grew steadily and possibly will take a direction similar to that shown by the history of PC malware. If so, soon the same, partly unsolved, problems will have to be faced like 0-day attacks, personal attacks or hacks and new appearing viruses at high frequency. A so-called 0-day attack is a threat based on a vulnerability for which no solution is currently available, typically because the threat is newly released.

In US 2003/0033536 A1 a system, method and computer program product for virus protection are described, wherein an anti-virus program is implemented in a wireless client device and a scan for malicious code is performed on the wireless client device utilizing the anti-virus program. Typically the memory of the device and inbound or outbound data streams traversing a communication port of the device are scanned.

However, the drawbacks mentioned above with respect to anti-virus software, like for instance the inability of detecting new unknown malware of a 0-day attack, still pertain in a system as described in US 2003/0033536 A1.

It is therefore an object of the present invention to show a new and improved approach to detect a malware attack on a communication device, in particular a mobile communication device, wherein especially also so-called 0-day attacks are detected. A further object of the invention is to detect malware attacks with a minimum number of false detections.

### Summary of the Invention

The inventive solution of the object is achieved by each of the subject matter of the respective attached independent claims. Advantageous and/or preferred embodiments or refinements are the subject matter of the respective attached dependent claims.

The inventive method for remotely monitoring a communication device, wherein said communication device is connectable to a communication network, accordingly comprises the steps of determining operational data of said communication device by a monitoring unit of the communication device, establishing a data connection between said communication device and a central unit via said communication network, transmitting the determined operational data from the communication device to the central unit, and detecting anomalous operational data by processing the determined operational data with at least one detection unit, wherein the determined operational data is compared with expected operational data, wherein said expected operational data is provided by the at least one detection unit based on a pre-defined algorithm.

The described method allows to detect unknown malicious applications, wherein also 0-day attacks are handled, due to utilizing an anomaly based detection through monitoring operational data of the communication device. Detecting anomalous operational data of the communication device and thus abnormal or anomalous behavior preferably leads to a positive malware detection depending on pre-defined parameters and/or algorithms without the need of signatures, which anti-virus software typically uses.

Detecting anomalous operational data of the communication device with advantage directly indicates an attack on the communication device by a malicious software. For the indication of an attack also further parameters can be defined which have to be met.

In a preferred embodiment of the method the communication device is a mobile communication device, like for instance a mobile phone, a smart-phone, a PDA or a Pocket PC, and the communication network is a wireless communication network, like for instance a cellular network or a WLAN. To avoid additional encumbrance of these already limited mobile devices, a central unit is provided for analyzing the relevant data.

The determined operational data preferably comprises data which describes the state of the communication device. Preferably the operational data comprises a set of data items, wherein each data item represents a different operational parameter of the communication device and wherein at least one data item is selected from the group consisting of a data item comprising information on user activity of the communication device, a data item comprising information on messaging activity of the communication device, a data item comprising information on an operating state and/or data directly controlled by the operating system of the communication device, a data item comprising information on the connectivity state of the communication device, a data item comprising information on network activity of the communication device, and a data item representing a hardware-related parameter of the communication device.

The data items of the determined operational data can also be described as features of the communication device and advantageously are gathered into a feature vector of a pre-defined format.

Since anomalous operational data caused by different types of malware is detected with differing quality by utilizing a given detection algorithm, preferably several different detection units are provided, wherein the advantages of the different detection units with respect to certain types of malware are combined to optimize the overall malware detection quality. Accordingly, in a preferred embodiment the determined operational data is processed by at least two detection units, wherein said at least two detection units provide expected operational data based on different pre-defined algorithms.

With several detection units present the detection of anomalous operational data of the communication device by one detection unit alone or alternatively by at least two detection units simultaneously preferably indicates an attack on the communication device by a malicious software. Thereby the detection sensibility can be flexibly adapted. By requiring at least two detection units to simultaneously detect anomalous operational data false detections of a malware attack can with advantage be reduced.

Preferred algorithms utilized by the at least one detection unit for providing the expected operational data comprise statistical models, neural network models and artificial immune systems. However, any other, also future algorithm suitable for detecting anomalies in operational data can be utilized for the invention. Further examples of possibly suitable algorithms comprise decision trees and support vector machines (SVM).

The algorithms utilized by the detection units typically depend on stored reference data for providing the expected operational data. Such reference data can for instance be prior operational data of the same communication device determined earlier, so that a behavior of a specific communication device which differs for its earlier behavior can be detected. The reference data can also with advantage comprise operational data of devices associated with a pre-defined group of devices, wherein the group of devices for instance comprises all communication devices connectable to the central unit which are of the same or similar device type as the communication device presently monitored. This is of advantage if the devices which are members of the group can be assumed to show a similar behavior, since that way the amount of reference data is increased, thereby increasing the detection quality. The reference data can further with advantage comprise operational data of devices associated with a pre-defined user group, like the employees of a company, since a similar usage pattern can be expected from such a user group.

The method further comprises with advantage the steps of storing the determined operational data in a pre-defined data format in a database by the central unit, retrieving the determined operational data from said database by the at least one detection unit, and storing a processing result in said database by the at least one detection unit. The utilization of a database has the advantage that analyzing by means of the detection units can be done at any time on the stored data. A pre-defined standardized data format for storing determined operational data, in particular as a feature vector, advantageously allows a standardized interface for flexibly adding additional detection units.

For practical purposes the method further comprises the steps of retrieving processing results from the database and displaying the retrieved results on a display of a user interface unit, which can for instance be provided as a computer terminal with access to the database.

For security purposes transmitting the determined operational data from the communication device to the central unit preferably comprises authenticating the communication device, and/or encrypting the determined operational data, and/or adding a checksum to the determined operational data and checking the data integrity by the receiving central unit.

For continuously monitoring the communication device the operational data with advantage is determined and transmitted automatically at pre-defined times. Preferably, the operational data is determined and transmitted by the communication device repeatedly with a pre-defined frequency.

Possible actions of a positive malware detection could be to disconnect the infected communication device from the network or even shutting the communication device down. The actions to take in case of a positive malware detection based on detected anomalous operational data of the communication device, however, are not the focus of this invention.

An inventive communication device, which is connectable to a communication network, comprises a monitoring unit adapted to determine operational data of the communication device, wherein the communication device is adapted to transmit operational data determined by means of said monitoring unit to a central unit via said communication network. In a preferred embodiment the communication device is provided as a mobile communication device connectable to a wireless communication network.

Preferably the monitoring unit is adapted to determine operational data which comprises a set of data items, wherein each data item represents a different operational parameter of the communication device and wherein at least one data item is selected from the group of data items as described above.

The communication device further is preferably adapted to automatically determine and transmit the operational data at pre-defined times. Most preferably it is adapted to automatically determine and transmit the operational data repeatedly with a pre-defined frequency, for instance by means of a timer.

An inventive system for remotely monitoring a communication device, comprises a central unit connectable to a communication network, at least one communication device as described above, which is connectable to said communication network and adapted to determine operational data of itself and to transmit determined operational data to said central unit, and at least one detection unit adapted to detect anomalous operational data by processing said determined operational data, wherein the detection unit is adapted to provide expected operational data based on a pre-defined algorithm and to compare the determined operational data with said expected operational data.

As described above, in a preferred embodiment of the system the communication network is a wireless communication network and the at least one communication device is provided as a mobile communication device.

For increasing the detection quality and especially to reduce false detections of malware attacks the system comprises at least two detection units, wherein said at least two detection units are adapted to provide expected operational data based on different pre-defined algorithms. The detection units preferably are adapted to provide the expected operational data based on a statistical model, and/or a neural network model, and/or an artificial immune system. With advantage the detection unit can also utilize any other, also future algorithm suitable for detecting anomalies in operational data.

Furthermore, the detection units advantageously are adapted to provide expected operational data depending on stored operational data, wherein said stored operational data preferably comprises prior operational data of the communication device, and/or operational data of devices associated with a pre-defined group of devices, and/or - operational data of devices associated with a pre-defined user group.

With special advantage the system comprises a database for storing determined operational data of a plurality of communication devices and for storing processing results, wherein said database is accessible by the central unit and the at least one detection unit. By utilizing a database the processing by the detection units can be done at any desired time and can also be repeated, for instance when a further detection unit has been added to the system or when the detection algorithm of a detection unit has been updated. Processing results can also be archived for later classification and statistical interpretation.

Accordingly, with advantage also a user interface unit is provided having access to said database, which is adapted to retrieve and display processing results, wherein the displayed processing results are preferably already classified by a results classification unit which also has access to the database.

### Brief Description of the Figures

It is shown in
- Fig. 1: a schematic view of an exemplary embodiment of a system for remotely monitoring communication devices,
- Fig. 2: a schematic view of a preferred embodiment of a mobile communication device,
- Fig. 3: a schematic view of layers of a preferred software architecture of the exemplary embodiment shown in Fig. 1,
- Fig. 4: a schematic view of sub-areas of the detection core layer shown in Fig. 3.

### Detailed Description of the Invention

Subsequently, preferred but exemplar embodiments of the invention are described in more detail with regard to the figures.

Especially mobile devices suffer from certain limitations, which result from mobility itself. First of all, power is provided by batteries, which have a limited lifetime. Then, connectivity is provided by several different techniques like for instance Wireless Lan (WLAN), each draining the battery additionally. The need of being portable limits the size of the device, which in turn limits the size of the embedded components and the device's capabilities, for instance the central processing unit (CPU) or the amount of random access memory (RAM).

Hence, most of the operations needed for detecting unknown malware, which only would unnecessarily encumber the device, are not computed on the device itself, but rather a client-server model is provided, in which the client side representing the mobile device gathers data describing its own software or hardware states and the server side receives this data for analysis.

Furthermore, as a variety of different operating systems (OS) for mobile devices exist, which allow installing monitoring software, as many as possible are supported in order to enable wide range detection.

Since reducing the amount of false-positives is an important point, especially relating to the anomaly based detection, different detection algorithms are combined, wherein preferably only certain algorithms are used for suitable data sets.

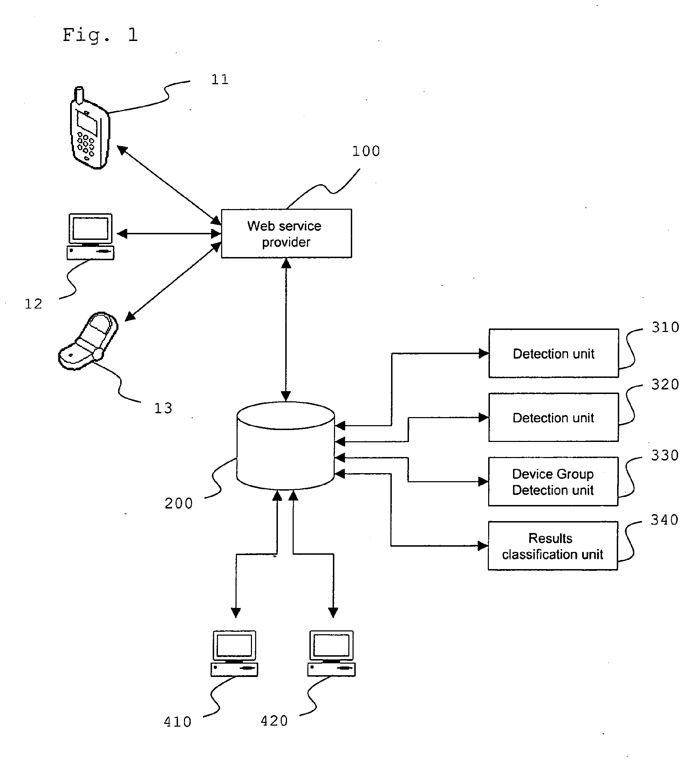

The architecture shown in Fig.1 meets the described requirements of not encumbering the already limited mobile devices, supporting a wide range of devices and reducing the amount of false positives.

The architecture for remote monitoring of communication devices shown in Fig. 1 comprises three main parts.

The first part is a monitoring unit which is integrated in each of the communication devices 11, 12 and 13, in the following also referred to as the mobile device observer (MoDO). The second part, in the following also referred to as the remote anomaly detection system (RADS), comprises a web service provider 100, a database 200, and detection units 310, 320 and 330. In the shown embodiment also a results classification unit 340 is provided. The third part comprises administration and observation user interfaces 410 and 420.

The communication devices 11, 12 and 13, of which the devices 11 and 13 are mobile communication devices, with an installed MoDO component regularly extract feature vectors, prepare them for transmission and transmit them to the RADS part of the architecture, in the shown embodiment to the web service provider 100. The received feature vectors are stored in database 200 by web service provider 100 for further processing.

The RADS supports the processing of feature vectors by several different (anomaly/malware) detection algorithms, instances of which are called detection unit. The RADS does not require specific detection units to be present, nor does it require a certain number. To be fully functional only one detection unit needs to be available for analyzing feature vectors. Detection results created by a detection unit, will be stored again in the database 200. These detection results at least comprise an infection state for a communication device. Possible states for instance are infected, clean and unknown. Detection units 310, 320 and 330 preferably store additional information in database 200, which for example can be used to visualize detection results. As detection is the main task of the shown architecture, the processing of detection results will be handled by applications, which are built upon the shown architecture.

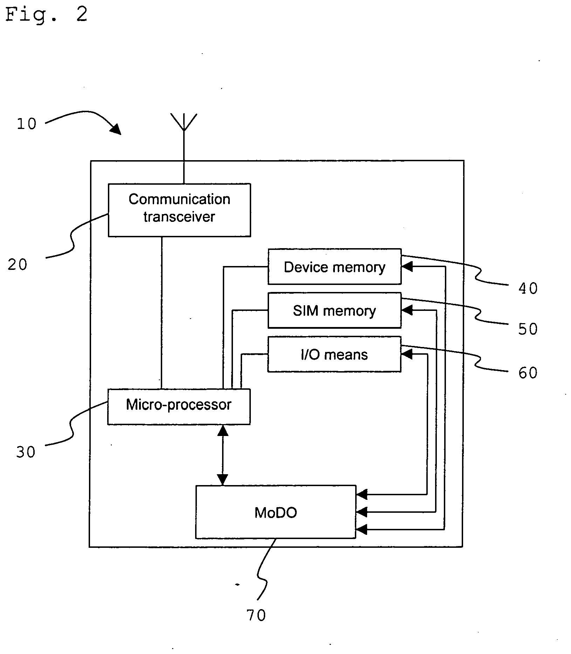

Fig. 2 shows schematic view of exemplary components of a preferred embodiment of a mobile communication device 10, provided as a mobile phone adapted to communicate in a cellular network. For this purpose a communication transceiver 20 is provided. Device 10 can for instance be identical to the mobile communication device 11 shown in Fig. 1.

The mobile communication device 10 is provided with a micro-processor 30 for controlling the device. An operating system (OS) and further application software is provided in device memory 40. User-related data is provided in a SIM (Subscriber Identification Module) memory. For user interaction I/O means 60 are provided.

The communication device 10 is further provided with a mobile device observer (MoDO) unit 70, which is adapted to monitor the operational state of the communication device 10. For this purpose the MoDO unit 70 has access to all relevant components of the communication device, in the shown embodiment these are the micro-processor 30, the memory modules 40 and 50 and the I/O means 60.

The MoDO component can be provided as a separate hardware unit which can be implemented into the communication device, but in a preferred embodiment it is provided as a software component, which can for instance reside in the device memory 40 or in the SIM memory 50.

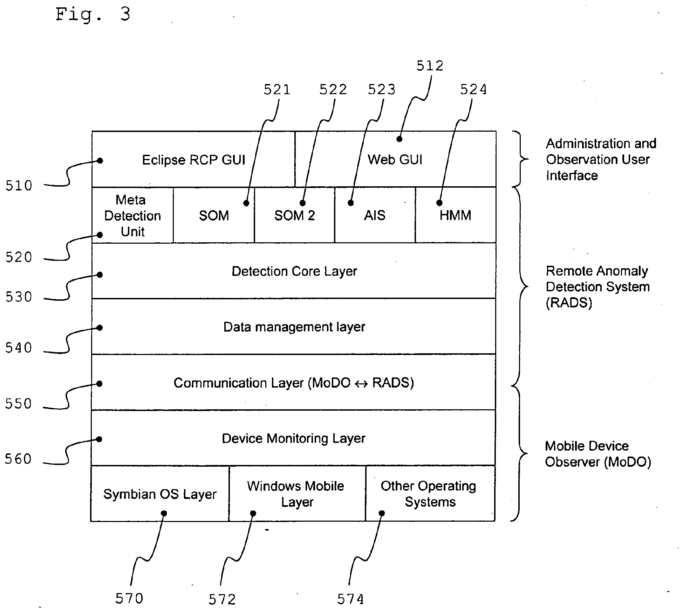

Fig. 3 schematically shows the software layers of the architecture shown in Fig. 1, which can be associated as shown with the above described three main parts of the architecture.

The Mobile Device Observer (MoDO), making up the lower part of Fig. 3, comprises a client side program that gathers data describing the state of this client for adding it to a feature vector. The client can be almost every communication device, even stationary, having the ability of installing the MoDo and measuring features on the device. The client side program makes up the device monitoring layer 560, set up on the appropriate operating system layer 570, 572 or 574. The interface to the RADS is provided by means of communication layer 550.

Examples of features that are preferably measured can be separated into five fields, which are:
- User:: Information on a user or actions that clearly show user activity, e.g. user inactivity time
- Messaging:: Actions relating to SMS, MMS and e-mail, e.g. SMS sent box count
- OS:: Values and characteristics describing states and data directly changed by the OS, e.g. process count
- Connectivity:: Network and connectivity indicators and measurable values, e.g. Bluetooth active
- System Hardware:: Characteristics relating to the device, mostly fixed values, e.g. hard disk size

Regarding and combining these fields helps to identify and categorize actions happening on the device, for instance if the user inactivity time is above 100 seconds and the feature vector shows an SMS in the outbox just sent to an unknown number which probably is a premium SMS service, this can for instance indicate malware activity. A great number of further such combinations could be given.

The feature vector is sent with a certain amount of features, for instance 20, to the RADS via communication layer 550 utilizing the simple object access protocol (SOAP), where only authorized devices are allowed to send, which is managed by an authentication system.

After receiving a feature vector the detection process is triggered on the remote anomaly detection system (RADS). This process can be performed in a variety of different ways, for instance by using statistical or clustering approaches, by using artificial immune systems. The process can further comprise detecting an anomaly for a single device and/or detecting anomalies by comparing groups of similar devices.

Suitable clustering approaches utilizing neutral networks, and in particular self-organizing maps (SOM), are described in "Managing Strategies for a Self-Organizing Map Based Filtering Agent Community", Christian Scheel, Master's thesis, Technische Universitat Berlin, Berlin, Germany, 2005. Suitable artificial immune systems are described in "Beherrschbarkeit zukunftiger Bedrohungen durch ein Kunstliches Immunsystem (AIS) auf Basis von Agententechnologien", Robert Wetzker, Master's thesis, Technische Universitat Berlin, Berlin, Germany, 2005, and in "Entwurf eines Kiinstlichen Immunsystems zur Netzwerkuberwachung auf Basis eines Multi-Agenten-Systems", Katja Luther, Master's thesis, Technische Universitat Berlin, Berlin, Germany, 2006.

All these approaches have advantages and disadvantages, and unfortunately, with unknown malware it is typically not known beforehand which approach will produce the best results.

But by using multiple detection units and comparing groups of similar devices results can advantageously be combined in order to get even better results. With our architecture we provide an interface for response modules.

In the following the relevant layers shown in Fig. 3 are further described.

The communication layer 550 provides web services, that are capable of receiving feature vectors from devices 11-13 and allow users to register themselves and devices they own. The communication layer 550 is also responsible for storing the received feature vectors in database 200. If required it also creates new entries for users and devices. The communication layer 550 does not directly access the database 200, it only interacts with the data management layer 540.

The data management layer 540 is responsible for actually managing a database 200. The database 200 is used as blackboard for the feature vector receiver which is located in the communication layer 550, the detection units 520-524, the visualization and administration components 510 and 512 and optional detection result processors.

In the shown embodiment, the layer with exemplary detections units 520-524 comprises a meta detection unit 520, two detection units 521 and 522 utilizing different variants of a self-organizing map for detection of anomalous operational data, one detection unit 523 utilizing an artificial immune system and one detection unit 524 utilizing a statistical hidden Markov model (HMM).

The data management layer 540 hides the database 200 from other layers and exposes access to the database 200 through web services in case of a remote user interface or through classes and methods. The detection core layer 530 for example uses these classes and methods for accessing feature vectors.

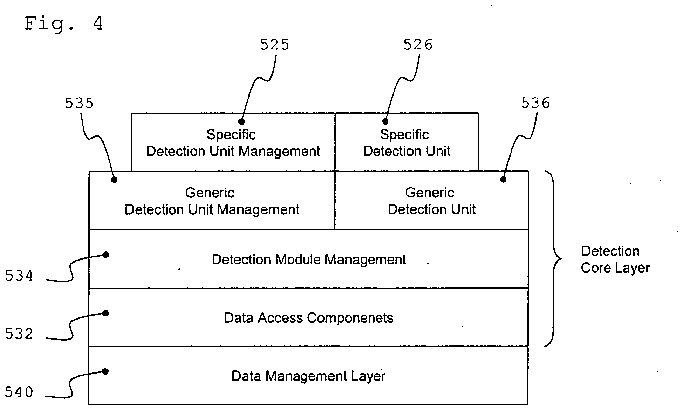

The detection core layer 530 has four sub areas, as shown in Fig. 4.

Data access components 532 within the detection core layer 530 are used as an interface to the data management layer 540. These components 532 are used for receiving data from the database 200 and committing data to the database 200.

A detection manager is responsible for the creation, observation and termination of detection module managers 534. This includes establishing a binding of detection module managers 534 to data access components 532. A detection module manager 534 performs similar tasks as the detection manager. It manages all the detection unit instances 526 and 536 for a specific anomaly detection approach.

The detection core layer 530 preferably also offers generic support for detection module managers 534 or detection units 525 and 535.

RADS advantageously is implemented in Java. Java can preferably used to enable an integration of RADS with the serviceware framework JIAC, which is described in "JIAC - An Open and Scalable Agent Architecture for Telecommunication Applications", Sahin Albayrak and Dirk Wieczorek, in Intelligent Agents in Telecommunications Applications - Basics, Tools, Languages and Applications, pages 189-202.

JIAC offers sophisticated runtime observation and configuration capabilities, which are preferably used for the runtime management of detection module managers and load balancing. Some anomaly detection approaches are also preferably realized with JIAC.

The possibility to visualize detection results and the received feature vectors is provided by means of the administration and observation user interface shown in Fig. 3. Like the detection core layer 530 the visualization offers basic generic visualizations and detection approach specific visualizations, so for instance it draws a self-organizing map. Different tools preferably are implemented, like a Java Rich Client Platform 510 and a Flash GUI 512. But as the interface can be used in several different ways, other tools can also with advantage be implemented.

In the following experiences with the architecture shown in Fig. 1 are described.

Enabling the detection on as many devices as possible is preferably achieved by using Java 2 Mobile Edition (J2ME), which is supported by most mobile devices but investigations already showed, that J2ME is so far not capable of accessing certain areas of a device, which is needed for gathering certain data. By providing a standardized web interface like SOAP programmers of all kinds of OS for mobile devices are enabled to develop client side monitoring tools, that are able to send data to the server/DB, e.g. from Symbian OS, MS Windows Mobile or Linux.

First measurements qualified Symbian OS as possible operating system, that is capable of gathering data on a compatible mobile device. But as an exemplary sent fixed data list has a size of four kByte including SOAP overhead, it is still of advantage to identify meaningful data and select these to be sent and also at which times it should be sent.

Accordingly a certain amount of intelligence is preferably provided in the sending device, thereby reducing the amount of sent data, which increases battery lifetime of the device, and also decreasing the stored data in the database.

For transmitting feature vectors preferably authentication of the monitored communication device and a check on data integrity are provided. The former being important in order to prevent spoofing and DoS, the latter to protect against modification of sample data with various intentions. Preferably a cryptographic checksum is provided allowing to detect modifications, while not putting too much strain on the mobile device's battery and processing unit.

Since authentication data typically is transmitted in-band to lessen the overhead, care must be taken that it is computationally easy to detect spoofed and maliciously created packets, otherwise the system would be very prone to DoS attacks. Means to detect delayed and lost packets are not strictly necessary but would be helpful in order to detect attacks and upcoming problems.

While there are only limited means to protect against traffic analysis in this centralized environment, the measured valued and registered events preferably are encrypted with standard algorithms in order to protect against eavesdropping.

The described architecture for remote monitoring of communication devices to detect unknown malicious software or applications represents a new approach of handling the upraising and already existing threats a mobile user has to encounter. Using an interface that only requires data in a standardized form allows utilization of almost every operating system currently available for mobile devices and even stationary systems for transmitting data to be analyzed. The transmitted data preferably is written to a database, which the detection units can access. If there is no need of real-time detection, the stored data can be analyzed hours or days later and the, again, standardized interface for the detection units can support detection units using every kinds of detection algorithms, even so far not recognized or future detection algorithms. Analyzed by one or more detection units the results are preferably written to the database again. For responses on positive detections an administration interface is provided. The detection and the detection results can be visualized by fetching the corresponding data from the database.

Therefore, the described approach is open for several operating systems for mobile and stationary devices, is able to use new detection algorithms and can visualize and even respond, if implemented, to known and unknown malicious applications threatening mobile devices.

## Claims

1. A method for remotely monitoring a mobile communication device (10-13) using a remote anomaly detection system comprising a central unit (100), a database (200) and at least two detection units (310-330), wherein said mobile communication device is connectable to a cellular network, comprising the steps of
- determining operational data of said mobile communication device (10-13) by a monitoring unit (70) of the mobile communication device (10-13),
- establishing a data connection between said mobile communication device (10-13) and said central unit (100) via said cellular network,
- transmitting the determined operational data from the mobile communication device (10-13) to the central unit (100) via said cellular network,
- storing the determined operational data in a pre-defined data format in the database (200) by the central unit (100),
- retrieving the determined operational data from said database (200) by the at least two detection units (310-330),
- detecting anomalous operational data by processing the determined operational data by the at least two detection units (310-330), wherein the at least two detection units compare the determined operational data with expected operational data, wherein said at least two detection units (310-330) provide said expected operational data based on different pre-defined algorithms (521-524), and
- storing a detection result in said database (200) by the at least two detection units (310-330).

2. The method according to claim 1, wherein the operational data comprises a set of data items, each data item representing a different operational parameter of the mobile communication device (10, 11, 13).

3. The method according to any one of the preceding claims, wherein said operational data comprises at least one data item selected from the group consisting of
- a data item comprising information on user activity of the mobile communication device (10, 11, 13),
- a data item comprising information on messaging activity of the mobile communication device (10, 11, 13),
- a data item comprising information on an operating state and/or data directly controlled by the operating system of the mobile communication device (10, 11, 13),
- a data item comprising information on the connectivity state of the mobile communication device (10, 11, 13),
- a data item comprising information on network activity of the mobile communication device (10, 11, 13), and
- a data item representing a hardware-related parameter of the mobile communication device (10, 11, 13).

4. The method according to any one of the preceding claims, wherein the pre-defined algorithm used by at least one detection unit of said at least two detection units (310-330) for providing the expected operational data is based on
- a statistical model (524) and/or
- a neural network model (521, 522) and/or
- an artificial immune system (523).

5. The method according to any one of the preceding claims, wherein the expected operational data is provided depending on stored reference data.

6. The method according to claim 6, wherein the stored reference data comprises
- prior operational data of the mobile communication device (10, 11, 13), and/or
- operational data of devices associated with a pre-defined group of devices, and/or
- operational data of devices associated with a pre-defined user group.

7. The method according to any one of the preceding claims, further comprising the steps of
- retrieving from the database (200) and displaying the processing result by a user interface unit (410, 420).

8. The method according to any one of the preceding claims, wherein transmitting the determined operational data comprises
- authenticating the mobile communication device (10, 11, 13), and/or
- encrypting the determined operational data, and/or
- adding a checksum to the determined operational data and checking the data integrity by the receiving central unit (100).

9. The method according to any one of the preceding claims, wherein the operational data is determined and transmitted automatically by the mobile communication device (10, 11, 13) at pre-defined times.

10. The method according to claim 9, wherein operational data is determined and transmitted by the mobile communication device (10, 11, 13) repeatedly with a pre-defined frequency.

11. A system for remotely monitoring a communication device (10-13), comprising
- a remote anomaly detection system comprising a central unit (100) connectable to a cellular network, a database (200) and at least two detection units (310-330),
- at least one mobile communication device (10, 11, 13) connectable to said cellular network, said mobile communication device (10, 11, 13) comprising a monitoring unit (70) adapted to determine operational data of the mobile communication device (10, 11, 13) and said mobile communication device (10, 11, 13) being adapted to transmit operational data determined by means of said monitoring unit (70) to said central unit (100) via said cellular network, and said mobile communication device being adapted to establish a connection between the mobile communication device and the central unit, wherein
the central unit (100) is adapted to store the determined operational data in a pre-defined data format in the database (200),
said at least two detection units are respectively adapted to retrieve said determined operational data from the database (200) and to detect anomalous operational data by processing said determined operational data, wherein said at least two detection units (310-330) are adapted to provide expected operational data based on different pre-defined algorithms (521-524), to compare the determined operational data with said expected operational data, and to store a detection result in the database (200).

12. The system according to claim 11, wherein the pre-defined algorithm used by at least one of the detection units (310-330) for providing the expected operational data is based on
- a statistical model (524) and/or
- a neural network model (521, 522) and/or
- an artificial immune system (523).

13. The system according to any one of claims 11 or 12, wherein at least one of the detection units (310-330) is adapted to provide expected operational data depending on stored operational data.

14. The system according to claim 13, wherein the stored operational data comprises
- prior operational data of the mobile communication device (10, 11, 13), and/or
- operational data of devices associated with a pre-defined group of devices, and/or
- operational data of devices associated with a pre-defined user group.

15. The system according to according to any one of claims 11 to 14, further comprising a user interface unit (410, 420) having access to said database (200), which is adapted to retrieve and display processing results.

## Patentansprüche

1. Verfahren zur Fernüberwachung eines
Mobilkommunikationsgeräts (10 - 13) unter Verwendung eines Anomalie-Fernerkennungssystems, umfassend eine Zentraleinheit (100), eine Datenbank (200) und mindestens zwei Erkennungseinheiten (310 - 330), wobei das Mobilkommunikationsgerät mit einem Mobilfunknetz verbindbar ist, umfassend folgende Schritte:
- Ermitteln von Betriebsdaten des Mobilkommunikationsgeräts (10 - 13) durch eine Überwachungseinheit (70) des Mobilkommunikationsgeräts (10 - 13),
- Herstellen einer Datenverbindung zwischen dem Mobilkommunikationsgerät (10 - 13) und der Zentraleinheit (100) über das Mobilfunknetz,
- Übertragen der ermittelten Betriebsdaten von dem Mobilkommunikationsgerät (10 - 13) zu der Zentraleinheit (100) über das Mobilfunknetz,
- Speichern der ermittelten Betriebsdaten in einem vordefinierten Datenformat in der Datenbank (200) durch die Zentraleinheit (100),
- Abrufen der ermittelten Betriebsdaten aus der Datenbank (200) durch die mindestens zwei Erkennungseinheiten (310 - 330),
- Erkennen anomaler Betriebsdaten durch Verarbeiten der ermittelten Betriebsdaten durch die mindestens zwei Erkennungseinheiten (310 - 330), wobei die mindestens zwei Erkennungseinheiten die ermittelten Betriebsdaten mit erwarteten Betriebsdaten vergleichen, wobei die mindestens zwei Erkennungseinheiten (310 - 330) die erwarteten Betriebsdaten basierend auf verschiedenen vordefinierten Algorithmen (521 - 524) bereitstellen, und
- Speichern eines Erkennungsergebnisses in der Datenbank (200) durch die mindestens zwei Erkennungseinheiten (310 - 330).

2. Verfahren nach Anspruch 1, wobei die Betriebsdaten einen Satz von Datenelementen umfassen, wobei jedes Datenelement einen anderen Betriebsparameter des Mobilkommunikationsgeräts (10, 11, 13) repräsentiert.

3. Verfahren nach einem der vorhergehenden Ansprüche, wobei die Betriebsdaten mindestens ein Datenelement umfassen, das ausgewählt ist aus der Gruppe beinhaltend
- ein Datenelement, das Informationen zur Benutzeraktivität des Mobilkommunikationsgeräts (10, 11, 13) umfasst,
- ein Datenelement, das Informationen zur Kurznachrichtenaktivität des Mobilkommunikationsgeräts (10, 11, 13) umfasst,
- ein Datenelement, das Informationen zum Betriebszustand und/oder zu Daten umfasst, die direkt von dem Betriebssystem des Mobilkommunikationsgeräts (10, 11, 13) gesteuert werden,
- ein Datenelement, das Informationen zum Verbindungsstatus des Mobilkommunikationsgeräts (10, 11, 13) umfasst,
- ein Datenelement, das Informationen zur Netzwerkaktivität des Mobilkommunikationsgeräts (10, 11, 13) umfasst, und
- ein Datenelement, das einen hardwarebezogenen Parameter des Mobilkommunikationsgeräts (10, 11, 13) repräsentiert.

4. Verfahren nach einem der vorhergehenden Ansprüche, wobei der vordefinierte Algorithmus, der von mindestens einer Erkennungseinheit der mindestens zwei Erkennungseinheiten (310 - 330) zum Bereitstellen der erwarteten Betriebsdaten verwendet wird, auf folgendem basiert:
- einem statistischen Modell (524) und/oder
- einem Modell auf Basis eines neuronalen Netzes (521, 522) und/oder
- einem künstlichen Immunsystem (523).

5. Verfahren nach einem der vorhergehenden Ansprüche, wobei die erwarteten Betriebsdaten in Abhängigkeit von gespeicherten Referenzdaten bereitgestellt werden.

6. Verfahren nach Anspruch 6, wobei die gespeicherten Referenzdaten umfassen:
- frühere Betriebsdaten des Mobilkommunikationsgeräts (10, 11, 13) und/oder
- Betriebsdaten von Geräten, die einer vordefinierten Gruppe von Geräten zugeordnet sind, und/oder
- Betriebsdaten von Geräten, die einer vordefinierten Benutzergruppe zugeordnet sind.

7. Verfahren nach einem der vorhergehenden Ansprüche, ferner umfassend die Schritte:
- Abrufen des Verarbeitungsergebnisses aus der Datenbank (200) und Anzeigen desselben durch eine Benutzerschnittstelleneinheit (410, 420).

8. Verfahren nach einem der vorhergehenden Ansprüche, wobei das Übertragen der ermittelten Betriebsdaten folgendes umfasst:
- Authentifizieren des Mobilkommunikationsgeräts (10, 11, 13) und/oder
- Verschlüsseln der ermittelten Betriebsdaten und/oder
- Hinzufügen einer Prüfsumme zu den ermittelten Betriebsdaten und Überprüfen der Datenintegrität durch die empfangende Zentraleinheit (100).

9. Verfahren nach einem der vorhergehenden Ansprüche, wobei die Betriebsdaten von dem Mobilkommunikationsgerät (10, 11, 13) automatisch zu vordefinierten Zeiten bestimmt und übertragen werden.

10. Verfahren nach Anspruch 9, wobei Betriebsdaten von dem Mobilkommunikationsgerät (10, 11, 13) wiederholt mit einer vordefinierten Periodizität bestimmt und übertragen werden.

11. System zur Fernüberwachung eines Kommunikationsgeräts (10 - 13), umfassend:
- ein Anomalie-Fernerkennungssystem, umfassend eine Zentraleinheit (100), die mit einem Mobilfunknetz verbindbar ist, eine Datenbank (200) und mindestens zwei Erkennungseinheiten (310 - 330),
- mindestens ein Mobilkommunikationsgerät (10, 11, 13), das mit dem Mobilfunknetz verbindbar ist,
wobei das Mobilkommunikationsgerät (10, 11, 13) eine Überwachungseinheit (70) umfasst, die zum Ermitteln von Betriebsdaten des Mobilkommunikationsgeräts (10, 11, 13) ausgebildet ist, und
wobei das Mobilkommunikationsgerät (10, 11, 13) dafür ausgebildet ist, die von der Überwachungseinheit (70) ermittelten Betriebsdaten über das Mobilfunknetz an die Zentraleinheit (100) zu übertragen, und
wobei das Mobilkommunikationsgerät dafür ausgebildet ist, eine Verbindung zwischen dem Mobilkommunikationsgerät und
der Zentraleinheit herzustellen,
wobei die Zentraleinheit (100) dafür ausgebildet ist, die ermittelten Betriebsdaten in einem vordefinierten Datenformat in der Datenbank (200) zu speichern,
wobei die mindestens zwei Erkennungseinheiten jeweils dafür ausgebildet sind, die ermittelten Betriebsdaten aus der Datenbank (200) abzurufen und anomale Betriebsdaten durch Verarbeitung der ermittelten Betriebsdaten zu erkennen,
wobei die mindestens zwei Erkennungsioneneinheiten (310 - 330) dafür ausgebildet sind, erwartete Betriebsdaten basierend auf verschiedenen vordefinierten Algorithmen (521 - 524) bereitzustellen, um die ermittelten Betriebsdaten mit den erwarteten Betriebsdaten zu vergleichen und ein Erkennungsergebnis in der Datenbank zu speichern (200).

12. System nach Anspruch 11, wobei der vordefinierte Algorithmus, der von mindestens einer der Erkennungseinheiten (310 - 330) zum Bereitstellen der erwarteten Betriebsdaten verwendet wird, auf folgendem basiert:
- einem statistischen Modell (524) und/oder
- einem Modell auf Basis eines neuronalen Netzes (521, 522) und/oder
- einem künstlichen Immunsystem (523).

13. System nach einem der Ansprüche 11 oder 12, wobei mindestens eine der Erkennungseinheiten (310 - 330) dafür ausgebildet ist, erwartete Betriebsdaten in Abhängigkeit von gespeicherten Betriebsdaten bereitzustellen.

14. System nach Anspruch 13, wobei die gespeicherten Betriebsdaten umfassen:
- frühere Betriebsdaten des Mobilkommunikationsgeräts (10, 11, 13) und/oder
- Betriebsdaten von Geräten, die einer vordefinierten Gruppe von Geräten zugeordnet sind, und/oder
- Betriebsdaten von Geräten, die einer vordefinierten Benutzergruppe zugeordnet sind.

15. System nach einem der Ansprüche 11 bis 14, ferner umfassend eine Benutzerschnittstelleneinheit (410, 420) mit Zugriff auf die Datenbank (200), die zum Abrufen und Anzeigen von Verarbeitungsergebnissen ausgebildet ist.

## Revendications

1. Procédé de surveillance à distance d'un dispositif de communication mobile (10-13) au moyen d'un système de détection d'anomalies distant comprenant une unité centrale (100), une base de données (200) et au moins deux unités de détection (310-330), où ledit dispositif de communication mobile peut être connecté à un réseau cellulaire, comprenant les étapes consistant à :
- déterminer des données opérationnelles dudit dispositif de communication mobile (10-13), par une unité de surveillance (70) du dispositif de communication mobile (10-13) ;
- établir une connexion de données entre ledit dispositif de communication mobile (10-13) et ladite unité centrale (100) par l'intermédiaire dudit réseau cellulaire ;
- transmettre les données opérationnelles déterminées, du dispositif de communication mobile (10-13) à l'unité centrale (100), par l'intermédiaire dudit réseau cellulaire ;
- stocker les données opérationnelles déterminées dans un format de données prédéfini, dans la base de données (200), par l'unité centrale (100) ;
- récupérer les données opérationnelles déterminées, à partir de ladite base de données (200), par les au moins deux unités de détection (310-330) ;
- détecter des données opérationnelles anormales en traitant les données opérationnelles déterminées par les au moins deux unités de détection (310-330), où les au moins deux unités de détection comparent les données opérationnelles déterminées à des données opérationnelles attendues, où les au moins deux unités de détection (310-330) fournissent lesdites données opérationnelles attendues sur la base de différents algorithmes prédéfinis (521-524) ; et
- stocker un résultat de détection dans ladite base de données (200), par les au moins deux unités de détection (310-330).

2. Procédé selon la revendication 1, dans lequel les données opérationnelles comprennent un ensemble d'éléments de données, chaque élément de données représentant un paramètre opérationnel différent du dispositif de communication mobile (10, 11, 13).

3. Procédé selon l'une quelconque des revendications précédentes, dans lequel lesdites données opérationnelles comprennent au moins un élément de données sélectionné à partir du groupe constitué par :
- un élément de données comprenant des informations sur une activité d'utilisateur du dispositif de communication mobile (10, 11, 13) ;
- un élément de données comprenant des informations sur une activité de messagerie du dispositif de communication mobile (10, 11, 13) ;
- un élément de données comprenant des informations sur un état de fonctionnement et/ou des données directement commandées par le système d'exploitation du dispositif de communication mobile (10, 11, 13) ;
- un élément de données comprenant des informations sur l'état de connectivité du dispositif de communication mobile (10, 11, 13) ;
- un élément de données comprenant des informations sur une activité de réseau du dispositif de communication mobile (10, 11, 13) ; et
- un élément de données représentant un paramètre connexe au matériel du dispositif de communication mobile (10, 11, 13).

4. Procédé selon l'une quelconque des revendications précédentes, dans lequel l'algorithme prédéfini utilisé par au moins une unité de détection desdites au moins deux unités de détection (310-330) en vue de fournir les données opérationnelles attendues est basé sur :
- un modèle statistique (524) ; et/ou
- un modèle de réseau neuronal (521, 522) ; et/ou
- un système immunitaire artificiel (523).

5. Procédé selon l'une quelconque des revendications précédentes, dans lequel les données opérationnelles attendues sont fournies en fonction de données de référence stockées.

6. Procédé selon la revendication 6, dans lequel les données de référence stockées comprennent :
- des données opérationnelles antérieures du dispositif de communication mobile (10, 11, 13) ; et/ou
- des données opérationnelles de dispositifs associés à un groupe prédéfini de dispositifs ; et/ou
- des données opérationnelles de dispositifs associés à un groupe d'utilisateurs prédéfini.

7. Procédé selon l'une quelconque des revendications précédentes, comprenant en outre les étapes consistant à :
- récupérer, à partir de la base de données (200), et afficher le résultat de traitement par une unité d'interface utilisateur (410, 420).

8. Procédé selon l'une quelconque des revendications précédentes, dans lequel l'étape de transmission des données opérationnelles déterminées comprend les étapes consistant à :
- authentifier le dispositif de communication mobile (10, 11, 13) ; et/ou
- chiffrer les données opérationnelles déterminées ; et/ou
- ajouter une somme de contrôle aux données opérationnelles déterminées et vérifier l'intégrité des données, par l'unité centrale réceptrice (100).

9. Procédé selon l'une quelconque des revendications précédentes, dans lequel les données opérationnelles sont déterminées et transmises automatiquement par le dispositif de communication mobile (10, 11, 13) à des instants prédéfinis.

10. Procédé selon la revendication 9, dans lequel des données opérationnelles sont déterminées et transmises par le dispositif de communication mobile (10, 11, 13), de manière répétée, avec une fréquence prédéfinie.

11. Système de surveillance à distance d'un dispositif de communication mobile (10-13), comprenant :
- un système de détection d'anomalies distant comprenant une unité centrale (100) pouvant être connectée à un réseau cellulaire, une base de données (200) et au moins deux unités de détection (310-330) ;
- au moins un dispositif de communication mobile (10, 11, 13) pouvant être connecté audit réseau cellulaire, ledit dispositif de communication mobile (10, 11, 13) comprenant une unité de surveillance (70) apte à déterminer des données opérationnelles du dispositif de communication mobile (10, 11, 13), et où ledit dispositif de communication mobile (10, 11, 13) est apte à transmettre des données opérationnelles déterminées au moyen de ladite unité de surveillance (70) à ladite unité centrale (100) par l'intermédiaire dudit réseau cellulaire, et où ledit dispositif de communication mobile est apte à établir une connexion entre le dispositif de communication mobile et l'unité centrale,
dans lequel l'unité centrale (100) est apte à stocker les données opérationnelles déterminées dans un format de données prédéfini dans la base de données (200), lesdites au moins deux unités de détection sont respectivement aptes à récupérer lesdites données opérationnelles déterminées à partir de la base de données (200) et à détecter des données opérationnelles anormales en traitant lesdites données opérationnelles déterminées, dans lequel lesdites au moins deux unités de détection (310-330) sont aptes à fournir des données opérationnelles attendues sur la base de différents algorithmes prédéfinis (521-524), à comparer les données opérationnelles déterminées auxdites données opérationnelles attendues, et à stocker un résultat de détection dans la base de données (200).

12. Système selon la revendication 11, dans lequel l'algorithme prédéfini utilisé par au moins l'une des unités de détection (310-330) en vue de fournir les données opérationnelles attendues est basé sur :
- un modèle statistique (524) ; et/ou
- un modèle de réseau neuronal (521, 522) ; et/ou
- un système immunitaire artificiel (523).

13. Système selon l'une quelconque des revendications 11 et 12, dans lequel au moins l'une des unités de détection (310-330) est apte à fournir les données opérationnelles attendues en fonction de données opérationnelles stockées.

14. Système selon la revendication 13, dans lequel les données opérationnelles stockées comprennent :
- des données opérationnelles antérieures du dispositif de communication mobile (10, 11, 13) ; et/ou
- des données opérationnelles de dispositifs associés à un groupe prédéfini de dispositifs ; et/ou
- des données opérationnelles de dispositifs associés à un groupe d'utilisateurs prédéfini.

15. Système selon l'une quelconque des revendications 11 à 14, comprenant en outre une unité d'interface utilisateur (410, 420) ayant accès à ladite base de données (200), qui est apte à récupérer et à afficher des résultats de traitement.
